# EUROPEAN PATENT APPLICATION

(11) **EP 4 470 936 A1**
(43) Date of publication of application: **04.12.2024**
(21) Application number: 22924127.8
(22) Date of filing: 09.12.2022
(51) Int. Cl.: B65D 65/40, B32B 27/00, B32B 27/32, B32B 27/34

(54) **MULTILAYER CONTAINER AND METHOD FOR PRODUCING MULTILAYER CONTAINER**

(30) Priority: 27.01.2022 JP 2022010706
(71) Applicant: MITSUBISHI GAS CHEMICAL COMPANY, INC., Chiyoda-ku Tokyo 100-8324 (JP)
(72) Inventor: OGURO Hatsuki, Hiratsuka-shi, Kanagawa 254-0016 (JP); KOUNO Kenji, Hiratsuka-shi, Kanagawa 254-0016 (JP); MIYABE Takanori, Hiratsuka-shi, Kanagawa 254-0016 (JP)
(74) Representative: Vossius & Partner Patentanwälte Rechtsanwälte mbB
(86) International application number: PCT/JP2022/045480
(87) International publication number: WO 2023/145276

(57) **Abstract**

Provided are a multilayer container and a method for producing the multilayer container. The multilayer container includes: a polyolefin layer containing an acid-modified polyolefin and an acid-unmodified polyolefin; and a polyamide resin layer being in contact with the polyolefin layer and containing a polyamide resin. The polyamide resin contains a polyamide resin (a), which contains 70 mol% or more of diamine-derived structural units derived from meta-xylylenediamine, from 30 to 60 mol% of dicarboxylic acid-derived structural units derived from an α,ω-linear aliphatic dicarboxylic acid having from 4 to 20 carbons, and from 70 to 40 mol% of dicarboxylic acid-derived structural units derived from isophthalic acid. The acid-unmodified polyolefin has a melt flow rate of 20 g/10 minutes or more. A temperature X^{PO} is the melting point of the acid-unmodified polyolefin plus 65°C.

## Description

### Technical Field

The present invention relates to a multilayer container and a method for producing a multilayer container. In particular, the present invention relates to a multilayer container having a barrier layer made of a polyamide resin.

### Background Art

Methods of preserving food or pharmaceuticals need to suppress food deterioration, discoloration, and fading. As such, canning and bottling have been used as such methods. When canning or bottling is used, highly effective barrier properties against various gases such as oxygen and water vapor are demonstrated. However, cans and bottles cannot be heated in a microwave oven, and it is difficult to take the food contents out from cans or bottles and place them on plates or other serving dishes. In addition, cans and bottles lack suitability for disposal because they cannot be stacked together after use, resulting in bulky waste.

As a type of alternative storage container, thermoformed containers made of thermoplastic resin are widely used. In particular, containers made of a polyolefin, particularly polypropylene (hereinafter may be abbreviated as "PP"), have a melting point more than retort sterilization treatment temperature, and thus are widely used as storage containers for foods requiring retort treatment. However, although PP has excellent moisture resistance, it has the property of allowing oxygen to easily permeate, which is the cause of deterioration, discoloration and fading of food and medicine. As such, PP does not have sufficient performance for containers for long-term storage of food and medicine.

As a method for enabling long-term storage of food and medicine in a container made of PP, there is one using a multilayer container in which a thermoplastic resin layer having oxygen barrier properties is present as an intermediate layer. Specifically, a co-injected molded multilayer structure having a barrier layer and outer layers laminated in contact with both sides of the barrier layer is known (Patent Document 1). The barrier layer is made of a resin composition containing an ethylene-vinyl alcohol copolymer (A) and an alkali metal salt of a higher fatty acid (B) having a melting point of 250°C or less. The ethylene content of the ethylene-vinyl alcohol copolymer (A) is from 20 to 60 mol%, the degree of saponification is 90% or more, and the melt flow rate (MFR) at 190°C and 2160 g is from 3 to 20 g/10 minutes. The content of the alkali metal salt (B) in the barrier layer is from 50 to 1500 ppm in terms of metal atoms. The outer layers are made of a resin composition containing an unmodified polypropylene (E) and a maleic anhydride-modified polypropylene (F) having a melt viscosity lower than that of the unmodified polypropylene (E), a mass ratio of the maleic anhydride-modified polypropylene (F) to the total of the unmodified polypropylene (E) and the maleic anhydride-modified polypropylene (F), or [F/(E + F)], being from 0.025 to 0.2.

### Citation List

### Patent Documents

[Patent Document 1] WO 2018/074445

### Summary of Invention

### Technical Problem

However, it has been found that the multilayer container above has inferior transparency after a boiling treatment or a retort treatment. Further, the multilayer container is required to have oxygen barrier properties after a retort treatment. It has also been found that the multilayer container may have inferior moldability (appearance).

An object of the present invention is to solve such issues, and provided are a multilayer container having high transparency after a boiling treatment or a retort treatment, excellent oxygen barrier properties after a retort treatment, and excellent moldability; and a method for producing the multilayer container.

### Solution to Problem

The present inventors conducted studies targeting the above problems, and found that the above problems were solved by using a predetermined polyamide resin as a barrier resin and blending an acid-modified polyolefin and an acid-unmodified polyolefin having predetermined MFRs in a polyolefin layer.

Specifically, the issue described above is solved by the following solutions.
<1> A multilayer container including: a polyolefin layer containing an acid-modified polyolefin and an acid-unmodified polyolefin; and a polyamide resin layer being in contact with the polyolefin layer and containing a polyamide resin, the polyamide resin containing a polyamide resin (a), the polyamide resin (a) containing diamine-derived structural units and dicarboxylic acid-derived structural units, 70 mol% or more of the diamine-derived structural units being derived from meta-xylylenediamine, from 30 to 60 mol% of the dicarboxylic acid-derived structural units being derived from an α,ω-linear aliphatic dicarboxylic acid having from 4 to 20 carbons, and from 70 to 40 mol% of the dicarboxylic acid-derived structural units being derived from isophthalic acid, in which the acid-unmodified polyolefin has a melt flow rate of 20 g/10 minutes or more as measured under conditions of a temperature of X^{PO}°C and 2.16 kgf in accordance with JIS K7210-1:2014, and the temperature X^{PO} is a melting point of the acid-unmodified polyolefin plus 65°C.
<2> The multilayer container according to <1>, in which the acid-modified polyolefin has a melt flow rate, measured under conditions of a temperature of X^{mPO}°C and 2.16 kgf in accordance with JIS K7210-1:2014, that is more than the melt flow rate of the acid-unmodified polyolefin, the temperature X^{mPO} being a melting point of the acid-modified polyolefin plus 55°C.
<3> The multilayer container according to <1> or <2>, in which a content of an alkali metal salt of a higher fatty acid contained in the polyamide resin layer is less than 50 mass ppm in terms of alkali metal atoms.
<4> The multilayer container according to any one of <1> to <3>, in which the acid-modified polyolefin contains an acid-modified polypropylene.
<5> The multilayer container according to any one of <1> to <4>, in which the acid-modified polyolefin has a melt flow rate of more than 20 g/10 minutes and 500 g/10 minutes or less.
<6> The multilayer container according to any one of <1> to <5>, in which the acid-unmodified polyolefin contains polypropylene.
<7> The multilayer container according to any one of <1> to <6>, in which the acid-unmodified polyolefin has a melt flow rate of from 20 to 50 g/10 minutes.
<8> The multilayer container according to any one of <1> to <7>, in which the polyamide resin has a terminal amino group concentration of from 10 to 70 µeq/g.
<9> The multilayer container according to any one of <1> to <8>, in which the multilayer container is a multilayer injection-molded container.
<10> The multilayer container according to any one of <1> to <9>, in which the multilayer container has a haze of 10% or less as measured in accordance with JIS K-7105.
<11> The multilayer container according to any one of <1> to <10>, in which the multilayer container has a haze, measured after a boiling treatment at 85°C for 30 minutes in accordance with JIS K-7105, that is two times or less than the haze before the boiling treatment.
<12> The multilayer container according to any one of <1> to <11>, in which the polyamide resin (a) is an amorphous resin.
<13> A method for producing a multilayer container, the method including injection molding by injecting a polyolefin layer containing a polyolefin layer-forming composition and a polyamide resin layer containing a polyamide resin layer-forming composition into a mold in a way that the polyolefin layer and the polyamide resin layer are in contact with each other, the polyolefin layer-forming composition containing an acid-modified polyolefin and an acid-unmodified polyolefin, the acid-unmodified polyolefin having a melt flow rate of 20 g/10 minutes or more as measured under conditions of a temperature of X^{PO}°C and 2.16 kgf in accordance with JIS K7210-1:2014,
   the polyamide resin layer-forming composition containing a polyamide resin (a), the polyamide resin (a) containing diamine-derived structural units and dicarboxylic acid-derived structural units, 70 mol% or more of the diamine-derived structural units being derived from meta-xylylenediamine, from 30 to 60 mol% of the dicarboxylic acid-derived structural units being derived from an α,ω-linear aliphatic dicarboxylic acid having from 4 to 20 carbons, and from 70 to 40 mol% of the dicarboxylic acid-derived structural units being derived from isophthalic acid, in which the temperature X^{PO} is a melting point of the acid-unmodified polyolefin plus 65°C.
<14> The method of producing a multilayer container according to <13>, in which the acid-modified polyolefin has a melt flow rate, measured under conditions of a temperature of X^{mPO}°C and 2.16 kgf in accordance with JIS K7210-1:2014, that is more than the melt flow rate of the acid-unmodified polyolefin, the temperature X^{mPO} being a melting point of the acid-modified polyolefin plus 55°C.
<15> The method for producing a multilayer container according to <13> or <14>, in which the multilayer container is the multilayer container according to any one of <1> to <12>.

### Advantageous Effects of Invention

The present invention allows for the provision of a multilayer container having high transparency after a boiling treatment or a retort treatment, excellent oxygen barrier properties after a retort treatment, and excellent moldability, and the provision of a method for producing the multilayer container.

### Brief Description of Drawings

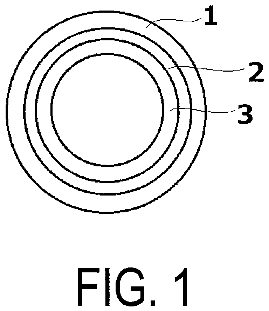

FIG. 1 is an example of a schematic cross-sectional view of the body of a multilayer container according to the present embodiment.

### Description of Embodiments

Hereinafter, embodiments for conducting the present invention (referred to simply as "the present embodiment" below) will be described in detail. Note that the present embodiment below is an example for describing the present invention, and the present invention is not limited to the present embodiment.

In the present specification, "from ... to ..." or "of ... to ..." is used to mean that the numerical values described before and after "to" are included as the lower limit and the upper limit, respectively.

In the present specification, various physical property values and characteristic values are values at 23°C unless otherwise noted.

When a measurement method or the like of a standard set forth in the present specification differs depending on the year, it is based on the standard as of January 1, 2022, unless otherwise stated.

A multilayer container according to the present embodiment is characterized by including: a polyolefin layer containing an acid-modified polyolefin and an acid-unmodified polyolefin; and a polyamide resin layer being in contact with the polyolefin layer and containing a polyamide resin, the polyamide resin containing a polyamide resin (a), the polyamide resin (a) containing diamine-derived structural units and dicarboxylic acid-derived structural units, 70 mol% or more of the diamine-derived structural units being derived from meta-xylylenediamine, from 30 to 60 mol% of the dicarboxylic acid-derived structural units being derived from an α,ω-linear aliphatic dicarboxylic acid having from 4 to 20 carbons, and from 70 to 40 mol% of the dicarboxylic acid-derived structural units being derived from isophthalic acid, in which the acid-unmodified polyolefin has a melt flow rate of 20 g/10 minutes or more as measured under conditions of a temperature of X^{PO}°C and 2.16 kgf in accordance with JIS K7210-1:2014, and the temperature X^{PO} is a melting point of the acid-unmodified polyolefin plus 65°C.

Such a configuration results in a multilayer container (transparent multilayer container) having high transparency after a boiling treatment or a retort treatment and also excellent oxygen barrier properties after a retort treatment.

Furthermore, such a configuration results in a multilayer container that can be formed by injection molding. In particular, such a configuration results in a multilayer container in which weld lines and streaks are hardly observed.

In addition, such a configuration results in a multilayer container having excellent adhesion between the polyolefin layer and the polyamide resin layer.

The details of the present embodiments will be described below.

### <Polyolefin Layer>

The polyolefin layer of the present embodiment contains an acid-modified polyolefin and an acid-unmodified polyolefin. It is presumed that the acid-modified polyolefin increases adhesion to the polyamide resin layer, which results in improved appearance even when the acid-unmodified polyolefin is subjected to injection molding.

### <<Acid-Unmodified Polyolefin>>

The acid-unmodified polyolefin used in the present embodiment has a melt flow rate of 20 g/10 minutes or more as measured under conditions of X^{PO}°C and 2.16 kgf in accordance with JIS K7210-1:2014. Here, the temperature X^{PO} is the melting point of the acid-unmodified polyolefin plus 65°C. The melting point is a value measured by DSC, and specifically measured by a method described in Examples below. In multilayer containers produced by known extrusion molding, polyolefins having an MFR of approximately 2 to 3 g/10 minutes are used. In the present embodiment, by setting the MFR of the polyolefin to 20 g/10 minutes or more, the resulting multilayer container can have an improved appearance even when the multilayer container is formed by injection-molded. The MFR of the acid-unmodified polyolefin is preferably 20 g/10 minutes or more, more preferably 25 g/10 minutes or more, and even more preferably 30 g/10 minutes or more. In addition, the MFR of the acid-unmodified polyolefin is preferably 50 g/10 minutes or less, and more preferably 48 g/10 minutes or less. Setting the MFR of the acid-unmodified polyolefin to the ranges above tends to result in improved thin-wall moldability.

The acid-unmodified polyolefin according to the present embodiment refers to a polyolefin that has a sufficiently smaller number of acid groups compared to the acid-modified polyolefin. Specifically, the amount of acid groups in the acid-unmodified polyolefin is 15 mol% or less, preferably 10 mol% or less, more preferably 5 mol% or less, even more preferably 3 mol% or less, still preferably 1 mol % or less than the amount of acid groups contained in the acid-modified polyolefin, and still more preferably, the acid-unmodified polyolefin contains no acid groups.

The acid-unmodified polyolefin according to the present embodiment preferably contains no polar groups other than the acid groups.

The acid-unmodified polyolefin according to the present embodiment preferably contains polypropylene. Examples of the polypropylene according to the present embodiment include a homopolymer of propylene and a copolymer obtained by copolymerizing propylene and 5 mass% or less (preferably 3 mass% or less) of another olefin such as ethylene, of which a homopolymer of propylene is preferable.

The melting point of the acid-unmodified polyolefin is preferably 150°C or more, and more preferably 155°C or more. Setting the melting point to equal to or more than the lower limits above tends to result in improved moldability. Furthermore, the melting point of the acid-unmodified polyolefin is preferably 180°C or lower, and more preferably 170°C or lower. Setting the melting point to equal to or lower than the upper limits above tends to result in improved moldability.

In a case where the polyolefin layer according to the present embodiment contains two or more types of acid-unmodified polyolefins, the melting point is the melting point of the acid-unmodified polyolefin having the largest content.

The melting point is measured according to a description in Examples below.

The content of the acid-unmodified polyolefin (preferably acid-unmodified polypropylene) in the polyolefin layer is preferably 90 mass% or more, more preferably 93 mass% or more, and even more preferably 94 mass% or more in the polyolefin layer.

In addition, the content of the acid-unmodified polyolefin in the polyolefin layer is preferably 99 mass% or less, more preferably 98 mass% or less, and even more preferably 96 mass% or less in the polyolefin layer.

The polyolefin layer may contain only one type of acid-unmodified polyolefin, or may contain two or more types thereof. When two or more kinds are contained, the total amount thereof is preferably in the above range.

### <<Acid-Modified Polyolefin>>

The type and the like of the acid-modified polyolefin used in the present embodiment are not limited, but it is preferable that the acid-modified polyolefin has an MFR measured under conditions of a temperature of X^{mPO}°C and 2.16 kgf in accordance with JIS K7210-1:2014 that is more than the MFR of the acid-unmodified polyolefin. It is presumed that such a configuration makes the acid-modified polyolefin easily compatible with the acid-unmodified polyolefin. It is presumed that as a result, the number of contact points between the acid-modified polyolefin in the polyolefin layer and the polyamide resin layer increases, and the proportion of covalent bonds between the acid groups of the acid-modified polyolefin and the amino groups of the polyamide resin (a) increases, resulting in further improved adhesion. The temperature X^{mPO} is the melting point of the acid-modified polyolefin plus 55°C. The melting point is a value measured by DSC, and specifically measured by a method described in Examples below.

The MFR of the acid-modified polyolefin measured under conditions of a temperature of X^{mPO}°C and 2.16 kgf in accordance with JIS K7210-1:2014 is preferably more than 20 g/10 minutes, more preferably 30 g/10 minutes or more, even more preferably 50 g/10 minutes or more, still preferably 100/10 minutes or more, still more preferably 200 g/10 minutes or more, yet still more preferably 300 g/10 minutes or more, and particularly yet still more preferably 400 g/10 minutes or more. Setting the MFR to equal to or more than the lower limits above tends to further improve compatibility with the acid-unmodified polyolefin. In addition, the MFR of the acid-modified polyolefin is preferably 500 g/10 minutes or less. Setting the MFR to equal to or lower than the upper limits above tends to result in an overall fluidity that is not too high and a good moldability.

The polyolefin constituting the acid-modified polyolefin according to the present embodiment preferably contains polypropylene. Examples of the polypropylene according to the present embodiment include a homopolymer of propylene and a copolymer obtained by copolymerizing propylene and 5 mass% or less (preferably 3 mass% or less) of another olefin such as ethylene, of which a homopolymer of propylene is preferable.

Preferred examples of a compound capable of acid-modifying a polyolefin include acrylic acid, methacrylic acid, maleic acid, fumaric acid, itaconic acid, crotonic acid, methylmaleic acid, methylfumaric acid, mesaconic acid, citraconic acid, glutaconic acid, cis-4-cyclohexene-1,2-dicarboxylic acid, endobicyclo[2.2.1]-5-heptene-2,3-dicarboxylic acid and metal salts of these carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2, 3-dicarboxylic acid anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. One of these can be used alone, or two or more thereof can be used in combination. Among these, maleic anhydride is preferred.

In the present embodiment, the acid-modified polyolefin is particularly preferably acid-modified polypropylene, and more preferably maleic anhydride-modified polypropylene.

The melting point of the acid-modified polyolefin is preferably 150°C or more, and more preferably 60°C or more. Setting the melting point to equal to or more than the lower limits above tends to result in improved moldability. Furthermore, the melting point of the acid-modified polyolefin is preferably 180°C or lower, and more preferably 170°C or lower. Setting the melting point to equal to or lower than the upper limits above tends to result in improved moldability.

In a case where the polyolefin layer according to the present embodiment contains two or more acid-modified polyolefins, the melting point is the melting point of the acid-unmodified polyolefin having the largest content.

The melting point is measured according to a description in Examples below.

The content of the acid-modified polyolefin (preferably acid-modified polypropylene, more preferably maleic anhydride-modified polypropylene) in the polyolefin layer is preferably 1 mass% or more, more preferably 2 mass% or more, and even more preferably 4 mass% or more in the polyolefin layer. Setting the content to equal to or more than the lower limits above tends to result in improved adhesion with a barrier layer. In addition, the content of the acid-modified polyolefin in the polyolefin layer is preferably 10 mass% or less, more preferably 7 mass% or less, and even more preferably 6 mass% or less in the polyolefin layer. Setting the content to equal to or less than the upper limits above tends to make a barrier layer easily separable during recycling.

The polyolefin layer may contain only one type of acid-modified polyolefin, or may contain two or more types thereof. When two or more kinds are contained, the total amount thereof is preferably in the above range.

### <GAcid-Modified Polyolefin and Acid-Unmodified Polyolefin>>

Next, the relationship between the acid-modified polyolefin and the acid-unmodified polyolefin will be explained.

In the present embodiment, a difference in the MFR of a-fins (MFR of acid-modified polyolefin - MFR of acid-unmodified polyolefin) is preferably 1 g/10 minutes or more, more preferably 10 g/10 minutes or more, even more preferably 50 g/10 minutes or more, still preferably 100 g/10 minutes or more, and still more preferably 200 g/10 minutes or more. Setting the difference to equal to or more than the lower limits above makes the acid-modified polyolefin more easily compatible with the acid-unmodified polyolefin and tends to improve the adhesion between the polyolefin layer and the polyamide resin layer. Further, a difference between the MFR of the acid-modified polyolefin and the MFR of the acid-unmodified polyolefin in the polyolefin layer is preferably, for example, 450 g/10 minutes or less.

Further, a ratio of the MFR of the acid-modified polyolefin to the MFR of the acid-unmodified polyolefin in the polyolefin layer (ratio of MFR of acid-modified polyolefin/MFR of acid-unmodified polyolefin) is preferably more than 1, more preferably 2 or more, even more preferably 5 or more, still preferably 7 or more, and still more preferably 9 or more. When the ratio is not less than the lower limit, adhesiveness tends to further improve. Further, the ratio of MFR of acid-modified polyolefin/MFR of acid-unmodified polyolefin is preferably 50 or less, more preferably 20 or less, even more preferably 18 or less, still preferably and 15 or less, and still more preferably 13 or less. Setting the ratio to equal to or lower than the upper limits above tends to result in improved moldability.

The mass ratio of the acid-unmodified polyolefin to the acid-modified polyolefin in the polyolefin layer is preferably 1 part by mass or more, more preferably 2 parts by mass or more, even more preferably 3 parts by mass or more, and still more preferably 5 parts by mass or more of the acid-unmodified polyolefin per 100 parts by mass of the acid-modified polyolefin. When the mass ratio is not less than the lower limit, adhesiveness tends to further improve. Moreover, the mass ratio of the acid-unmodified polyolefin to the acid-modified polyolefin in the polyolefin layer is preferably 10 parts by mass or less, and more preferably 7 parts by mass or less of the acid-unmodified polyolefin per 100 parts by mass of the acid-modified polyolefin. Setting the mass ratio to equal to or less than the upper limits above tends to make a barrier material easily separable during recycling.

The content of polyolefins (total content of the acid-modified polyolefin and the acid-unmodified polyolefin) in the polyolefin layer according to the present embodiment is preferably 85 mass% or more, more preferably 90 mass% or more, even more preferably 95 mass% or more, still preferably 98 mass% or more, and still more preferably 99 mass% or more of the entire polyolefin layer. The upper limit of the content of polyolefins (total content of the acid-modified polyolefin and the acid-unmodified polyolefin) in the polyolefin layer is 100 mass% or less.

### <<Additional Component>>

The polyolefin layer according to the present embodiment may contain components in addition to the acid-modified polyolefin and the acid-unmodified polyolefin without departing from the spirit of the present invention.

Examples of the additional components include thermoplastic resins other than polyolefins, plasticizers, antioxidants, heat stabilizers, ultraviolet absorbers, light stabilizers, lubricants, inorganic fillers, antistatic agents, flame retardants, and crystallization accelerators. The total content of these additional components is preferably 10 mass% or less, more preferably 5 mass% or less, even more preferably 3 mass% or less, and may be 1 mass% or less.

### <Polyamide Resin Layer>

The polyamide resin layer in the present embodiment is in contact with the polyolefin layer and contains the polyamide resin (a). Unlike the case of a known multilayer container having a polyolefin layer and a polyamide resin layer, in the present embodiment, the use of the above-described polyolefin layer makes it possible to ensure adhesion between the polyolefin layer and the polyamide resin layer and to maintain high transparency even after a boiling treatment or a retort treatment, even if an adhesive resin layer is not provided between the polyolefin layer and the polyamide resin layer.

### <<Polyamide Resin (a)>>

The polyamide resin layer according to the present embodiment contains the polyamide resin (a), which contains diamine-derived structural units and dicarboxylic acid-derived structural units, 70 mol% or more of the diamine-derived structural units being derived from meta-xylylenediamine, from 30 to 60 mol% of the dicarboxylic acid-derived structural units being derived from an α,ω-linear aliphatic dicarboxylic acid having from 4 to 20 carbons, and from 70 to 40 mol% of the dicarboxylic acid-derived structural units being derived from isophthalic acid.

Such polyamide resin (a) has high oxygen barrier properties. Therefore, the polyamide resin layer functions as an oxygen barrier layer in the multilayer container of the present embodiment. Moreover, such polyamide resin (a) has high transparency. In particular, since the polyamide resin (a) also has excellent transparency after a heat treatment, it can be preferably used in a container to be subjected to retort or a container to be subjected to boiling. Furthermore, the polyamide resin (a) can also maintain high adhesion to the polyolefin layer despite that the polyamide resin (a) is largely different from polyolefins in structure and the like.

In the polyamide resin (a), 70 mol% or more, preferably 80 mol% or more, more preferably 90 mol% or more, still more preferably 95 mol% or more, and even more preferably 99 mol% or more of the diamine-derived structural units are derived from xylylenediamine. The xylylenediamine is preferably meta-xylylenediamine and para-xylylenediamine, and is more preferably meta-xylylenediamine.

In an example of a preferred embodiment of the polyamide resin (a) according to the present embodiment, 70 mol% or more (preferably 80 mol% or more, more preferably 90 mol% or more, even more preferably 95 mol% or more, and still preferably 99 mol% or more) of the diamine-derived structural units are derived from meta-xylylenediamine.

Examples of the diamine other than xylylenediamine include aromatic diamines such as para-phenylenediamine, and aliphatic diamines, such as 1,3-bis(aminomethyl)cyclohexane, 1,4-bis(aminomethyl)cyclohexane, tetramethylene diamine, pentamethylene diamine, hexamethylene diamine, octamethylene diamine, and nonamethylene diamine. A single type of these other diamines may be used, or two or more types thereof may be used.

In a case where a diamine other than xylylenediamine is used as the diamine component, the diamine thereof is used at a proportion of preferably 30 mol% or less, more preferably from 1 to 25 mol%, and particularly preferably from 5 to 20 mol%, of the structural unit derived from a diamine.

In the present embodiment, as described above, from 30 to 60 mol% of the dicarboxylic acid-derived structural units in the polyamide resin (a) are derived from an α,ω-linear aliphatic dicarboxylic acid having from 4 to 20 carbons, and from 70 to 40 mol% of the dicarboxylic acid-derived structural units in the polyamide resin (a) are derived from isophthalic acid.

Among the total dicarboxylic acids constituting the dicarboxylic acid-derived structural units in the polyamide resin (a), the lower limit of the proportion of the α,ω-linear aliphatic dicarboxylic acid having from 4 to 20 carbons (preferably, an α,ω-linear aliphatic dicarboxylic acid having from 4 to 8 carbons, and more preferably adipic acid) is 30 mol% or more, preferably 33 mol% or more, more preferably 35 mol% or more, even more preferably 38 mol% or more, still preferably 40 mol% or more, and may be 45 mol% or more. The upper limit of the proportion of the α,ω-linear aliphatic dicarboxylic acid having from 4 to 20 carbons is 60 mol% or less, and preferably 55 mol% or less. Such ranges tend to further improve the transparency of the resulting multilayer container while improving the oxygen barrier property of the multilayer container of the present embodiment.

As described above, the α,ω-linear aliphatic dicarboxylic acid having from 4 to 20 carbons is preferably an α,ω-linear aliphatic dicarboxylic acid having from 4 to 8 carbons.

Examples of the α,ω-linear aliphatic dicarboxylic acid having from 4 to 20 carbons that is preferably used as the raw material dicarboxylic acid component of the polyamide resin include aliphatic dicarboxylic acids, such as succinic acid, glutaric acid, pimelic acid, suberic acid, azelaic acid, adipic acid, sebacic acid, undecanedioic acid, and dodecanedioic acid. A single type thereof can be used, or two or more types thereof can be mixed and used. Among these, adipic acid is preferable because the melting point of the polyamide resin is within an appropriate range for molding.

Among the total dicarboxylic acids constituting the dicarboxylic acid-derived structural units in the polyamide resin (a), the lower limit of the proportion of the isophthalic acid is preferably 40 mol% or more, and more preferably 45 mol% or more. The upper limit of the proportion of the isophthalic acid is 70 mol% or less, preferably 67 mol% or less, more preferably 65 mol% or less, even more preferably 62 mol% or less, and still preferably 60 mol% or less, and may be 55 mol% or less. Setting the proportion of the isophthalic acid to such a range tends to further improve the oxygen barrier property of the multilayer container of the present embodiment.

Among the dicarboxylic acid-derived structural units in the polyamide resin (a), the total proportion of isophthalic acid-derived structural units and structural units derived from the α,ω-linear aliphatic dicarboxylic acid having from 4 to 20 carbons is preferably 90 mol% or more, more preferably 95 mol% or more, even more preferably 98 mol% or more, and still preferably 99 mol% or more. The upper limit of the total proportion of isophthalic acid-derived structural units and structural units derived from the α,ω-linear aliphatic dicarboxylic acid having from 4 to 20 carbons does not exceed 100 mol%. Setting such a proportion tends to further improve the transparency of the multilayered body of the present embodiment.

Examples of dicarboxylic acids other than isophthalic acid and the α, ω-linear aliphatic dicarboxylic acid having from 4 to 20 carbons include a phthalic acid compound, such as terephthalic acid and ortho-phthalic acid; and naphthalenedicarboxylic acids, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these can be used alone, or two or more types can be mixed and used.

The polyamide resin (a) is preferably substantially free of terephthalic acid-derived structural units. "Substantially free" means that terephthalic acid-derived structural units are 5 mol% or less, preferably 3 mol% or less, even more preferably 1 mol% or less, still preferably 0 mol% of the molar amount of isophthalic acid contained in the polyamide resin (a). With such a configuration, suitable moldability is maintained, and the gas barrier property is less likely to change due to humidity.

The polyamide resin (a) preferably has a terminal amino group concentration of from 10 to 70 peq/g. Setting the terminal amino group concentration to equal to or more than the lower limit above can further increase the adhesion to the acid-modified polyolefin. The terminal amino group concentration is determined as follows. 0.3 g of the polyamide resin (a) is added to a mixed solvent of phenol/ethanol in a volume ratio of 4/1, and the mixture is stirred at from 20 to 30°C to completely dissolve the polyamide resin (a). Then, the inner wall of the vessel is rinsed with 5 mL of methanol under stirring, and the terminal amino group concentration [NH₂] is determined by neutralization titration with a 0.01 mol/L hydrochloric acid aqueous solution.

In addition, it is preferable that the terminal amino group concentration of the polyamide resin contained in the polyamide resin layer according to the present embodiment, that is, the mixture of the polyamide resin (a) and another polyamide resin, satisfies the above range.

Note that, the polyamide resin (a) used in the present embodiments contains the dicarboxylic acid-derived structural units and the diamine-derived structural units as main components, but may also contain structural units in addition to the dicarboxylic acid-derived structural units and the diamine-derived structural units, or other moieties such as terminal groups. Examples of other structural units include, but are not limited to, structural units derived from, for example, a lactam such as ε-caprolactam, valerolactam, laurolactam, and undecalactam, or from an aminocarboxylic acid such as 11-aminoundecanoic acid and 12-aminododecanoic acid. Furthermore, the polyamide resin (a) used in the present embodiment may include trace amounts of components such as additives used for synthesis. Typically, 95 mass% or more, and preferably 98 mass% or more of the polyamide resin (a) used in the present embodiment are the dicarboxylic acid-derived structural units or the diamine-derived structural units.

The polyamide resin (a) used in the present embodiment is preferably an amorphous resin. By using an amorphous resin, the polyamide resin (a) is less likely to have cloudiness and can maintain high transparency even when the polyamide resin (a) is subjected to a boiling treatment or a retort treatment.

An amorphous resin refers to a resin that does not have a clear melting point. The melting point is a melting point measured according to the description in paragraph [0036] of WO 2017/090556.

In the polyamide resin layer according to the present embodiment, the content of the polyamide resin (a) is preferably 85 mass% or more, more preferably 90 mass% or more, even more preferably 95 mass% or more, still preferably 98 mass% or more, and still more preferably 99 mass% or more of the entire polyamide resin layer. The upper limit of the content of the polyamide resin (a) in the polyamide resin layer is 100 mass% or less.

The polyamide resin layer may contain only one type of the polyamide resin (a), or two or more types thereof. When two or more types thereof are contained, the total amount is preferably within the ranges described above.

### <<Additional Component>>

The polyamide resin layer according to the present embodiment may contain a component in addition to the polyamide resin (a) without departing from the spirit of the present invention.

The additional component may contain thermoplastic resins other than the polyamide resin (a), and inorganic fillers such as glass fibers and carbon fibers; plate-shaped inorganic fillers such as glass flakes, talc, kaolin, mica, montmorillonite, and organo-modified clay; impact resistance modifiers such as various elastomers; crystal nucleating agents; lubricants such as fatty acid amide-based lubricants and fatty acid amide type compounds; antioxidants such as copper compounds, organic or inorganic halogen-based compounds, hindered phenol-based compounds, hindered amine-based compounds, hydrazine-based compounds, sulfur-based compounds, and phosphorus-based compounds; coloring inhibitors; UV absorbers such as benzotriazole-based UV absorbers; additives such as mold release agents, plasticizers, colorants, and flame retardants; and additives such as oxidation reaction accelerators, recycling aids, and compounds containing benzoquinones, anthraquinones, or naphthoquinones. The total content of these additional components is preferably 10 mass% or less, more preferably 5 mass% or less, even more preferably 3 mass% or less, and may be 1 mass% or less.

Regarding the oxidation reaction accelerators, reference can be made to the descriptions in paragraphs [0034] to [0036] of WO 2019/058986, the contents of which are incorporated herein.

The polyamide resin in addition to the polyamide resin (a) may be an aliphatic polyamide resin or a semi-aromatic polyamide resin, and is preferably an aliphatic polyamide resin. Examples of the aliphatic polyamide resin include polyamide 6, polyamide 66, polyamide 10, polyamide 11, polyamide 12, polyamide 46, polyamide 610, polyamide 612, and polyamide 666, of which polyamide 6, polyamide 66, and polyamide 666 are preferable, and polyamide 6 is more preferable. Examples of the semi-aromatic polyamide resin include 6T, 6T/6I, 9T, and 9N (polycondensate of nonanediamine and naphthalene dicarboxylic acid). Only one type of the polyamide resin in addition to the polyamide resin (a) may be used, or two or more types thereof may be used.

In the present embodiment, the polyamide resin layer may or may not contain an alkali metal salt of a higher fatty acid.

In the present embodiment, the content of the alkali metal salt of a higher fatty acid contained in the polyamide resin layer is preferably less than 50 mass ppm, more preferably less than 40 mass ppm, and even more preferably less than 30 mass ppm in terms of alkali metal atoms. Reducing the amount of the alkali metal salt of a higher fatty acid in the polyamide resin layer yields the advantage of improving the appearance of the resulting multilayer container.

The alkali metal salt of a higher fatty acid is preferably a salt of a fatty acid having from 12 to 30 carbons. Preferable examples of the fatty acid forming the salt include saturated fatty acids such as lauric acid, myristic acid, palmitic acid, stearic acid, arachidic acid, and behenic acid. Preferred alkali metals include potassium and sodium.

### <Layer Structure of Multilayer Container>

The multilayer container of the present embodiment has a polyolefin layer and a polyamide resin layer in contact with the polyolefin layer. Usually, the polyolefin layer is on the outside. Furthermore, the multilayer container of the present embodiment preferably has a three-layer structure of polyolefin layer/polyamide resin layer/polyolefin layer. Specifically, as illustrated in FIG. 1, a cross-section of the body of the multilayer container is composed of a polyolefin layer 1, a polyamide resin layer 2, and a polyolefin layer 3 in this order from the outside. The polyolefin layer 1 and the polyamide resin layer 2 are in contact with each other in the plane direction perpendicular to the cross-section of the body, and the polyamide resin layer 2 and the polyolefin layer 3 are also in contact with each other in the plane direction perpendicular to the cross-section of the body. Note that, the thickness in FIG. 1 is not necessarily proportional to the actual thickness. In the multilayer container of the present embodiment, a portion other than the body, such as the bottom of the multilayer container, preferably has the three-layer structure of the polyolefin layer/polyamide resin layer/polyolefin layer, but is not necessarily limited thereto. Further, in this case, the two polyolefin layers may be polyolefin layers having the same composition, or may be polyolefin layers having different compositions. However, both of the two polyolefin layers preferably contain the acid-modified polyolefin and the acid-unmodified polyolefin, and the MFR of the unmodified polyolefin is preferably 20 g/10 minutes or more. Furthermore, in both of the two polyolefin layers, the MFR of the acid-modified polyolefin is preferably more than the MFR of the acid-unmodified polyolefin.

Furthermore, the multilayer container of the present embodiment may have a five-layer structure such as polyolefin layer/polyamide resin layer/polyolefin layer/polyamide resin layer/polyolefin layer. In this case, at least one polyamide resin layer may be in contact with at least one adjacent polyolefin layer, but it is preferable that all polyamide resin layers are in contact with the adjacent polyolefin layers. Moreover, the multilayer container of the present embodiment may have other layers as long as the multilayer container has a polyolefin layer and a polyamide resin layer in contact with the polyolefin layer.

A thickness ratio of the polyolefin layer and the polyamide resin layer in the multilayer container of the present embodiment is not limited, but the thickness of one polyamide resin layer is preferably from 0.5 to 40, and more preferably from 1 to 30, when the thickness of one polyolefin layer is 100. In addition, when the multilayer container of the present embodiment has a layer configuration of polyolefin layer/polyamide resin layer/polyolefin layer, the thickness of the polyamide resin layer is preferably from 1 to 20, and more preferably from 2 to 15, when the total thickness of the polyolefin layers is 100.

The thickness of the polyamide resin layer is preferably 10 µm or more, more preferably 20 um or more, and preferably 150 µm or less, more preferably 100 µm or less, and even more preferably 90 um or less per layer.

The thickness of the polyolefin layer is preferably 0.2 mm or more, more preferably 0.3 mm or more, and preferably 1.4 mm or less, and more preferably 1.0 mm or less per layer.

Further, the thickness of the multilayer container is preferably 0.4 mm or more, more preferably 0.7 mm or more, and preferably 3 mm or less, more preferably 2 mm or less.

The multilayer container of the present embodiment preferably has high transparency even after a boiling treatment. Specifically, the haze measured after a boiling treatment at 85°C for 30 minutes in accordance JIS K-7105 is preferably 2 times or less, more preferably 1.5 times or less, and even more preferably 1.2 times or less the haze before the boiling treatment. The lower limit of the haze measured after a boiling treatment is ideally 1.0 time the haze before the boiling treatment, but if the transparency after the boiling treatment is better (for example, 0.8 times or more), the haze after the boiling treatment can also be preferably used as the lower limit.

The initial haze (haze measured after molding and before boiling treatment or retort treatment) of the multilayer container of the present embodiment measured in accordance with JIS K-7105 is preferably 10% or less, more preferably 5% or less, and even more preferably 3% or less. The lower limit of the haze is ideally 0%, but the performance requirement is sufficiently satisfied even when the lower limit of the haze is 0.1% or more.

### <Method for Producing Multilayer Container>

The multilayer container of the present embodiment is preferably formed by injection molding. That is, the multilayer container of the present embodiment is preferably a multilayer injection-molded container. Therefore, although weld lines due to the mold are formed in the multilayer container of the present embodiment, the use of the desired polyolefin layer (polyolefin layer-forming composition) in the present embodiment results in smaller weld lines.

More specifically, a method for producing a multilayer container of the present embodiment is preferably one that includes injection molding by injecting a polyolefin layer formed from a polyolefin layer-forming composition and a polyamide resin layer formed from a polyamide resin layer-forming composition into a mold in a way that the polyolefin layer and the polyamide resin layer are in contact with each other, the polyolefin layer-forming composition containing an acid-modified polyolefin and an acid-unmodified polyolefin, the acid-unmodified polyolefin having a melt flow rate of 20 g/10 minutes or more as measured under conditions of a temperature of X^{PO}°C and 2.16 kgf in accordance with JIS K7210-1:2014, the polyamide resin layer-forming composition containing a polyamide resin (a), the polyamide resin (a) containing diamine-derived structural units and dicarboxylic acid-derived structural units, 70 mol% or more of the diamine-derived structural units being derived from meta-xylylenediamine, from 30 to 60 mol% of the dicarboxylic acid-derived structural units being derived from an α,ω-linear aliphatic dicarboxylic acid having from 4 to 20 carbons, and from 70 to 40 mol% of the dicarboxylic acid-derived structural units being derived from isophthalic acid, in which the temperature X^{PO} is a melting point of the acid-unmodified polyolefin plus 65°C. In particular, it is preferable that the injection results in the portion in contact with the mold being the polyolefin layer (for example, results in polyolefin layer/polyamide resin layer/polyolefin layer).

The multilayer container is preferably the multilayer container of the present embodiment described above. That is, in the multilayer container, the acid-modified polyolefin preferably has a melt flow rate, measured under conditions of a temperature of X^{mPO}°C and 2.16 kgf in accordance with JIS K7210-1:2014, that is more than the melt flow rate of the acid-unmodified polyolefin, the temperature X^{mPO} being the melting point of the acid-modified polyolefin plus 55°C. Furthermore, preferable materials constituting the polyolefin layer-forming composition and the contents thereof are the same as those described in the section of the polyolefin layer. In addition, preferable materials constituting the polyamide resin layer-forming composition and the contents thereof are also the same as those described in the section of the polyamide resin layer.

The injection molding in the production method of the present embodiment is, for example, a molding method in which a melt of the polyolefin layer-forming composition and a melt of the polyamide resin layer-forming composition are separately injected and filled into a pre-closed mold and solidified to form a multilayer container. Therefore, it is desirable that the melt of the polyolefin layer-forming composition and the melt of the polyamide resin layer-forming composition (particularly, the melt of the polyolefin layer-forming composition) in the mold have high fluidity. In the present embodiment, since the polyolefin used has a high MFR, molding can be performed by injection molding (preferably co-injection molding). That is, an excellent multilayer container can be formed by injecting and filling the polyolefin layer-forming composition and the polyamide resin layer-forming composition into a mold almost simultaneously even without adopting two-color molding. In addition, unlike the biaxial stretch blow molding described below, the shape of the mold into which the melt of the polyolefin layer-forming composition and the melt of the polyamide resin layer-forming composition are initially filled becomes the shape of the final product, and thus the fluidity of the melts is important. That is, the injection molding according to the present embodiment does not include a biaxial stretch blow molding method. Further, in the present embodiment, the multilayer container is usually formed by injection molding, and thus it has weld lines.

Meanwhile, in extrusion blow molding in which a molding material is heated and melted, extruded into a cylindrical shape, and sandwiched between molds, into which air is blown to form a hollow article, the fluidity of the material does not cause as many problems as in injection molding. Further, in a biaxial stretch blow molding method in which only the body wall portion of a preform (semi-finished product) obtained by an injection molding method is reheated, a stretching rod is stuck into a blow mold, and high-pressure air is blown into the blow mold to form a hollow article, the fluidity of the material does not cause as many problems as in injection molding.

Note that, although the multilayer container of the present embodiment is suitable for production by injection molding, multilayer containers formed by other molding methods including blow molding and biaxial stretch molding are not excluded.

In addition, when performing co-injection molding, the polyamide resin layer-forming composition and the polyolefin layer-forming composition are co-injected, preferably with the polyamide resin layer-forming composition serving as an intermediate layer and with the polyolefin layer-forming composition being in contact with both sides of the polyamide resin layer-forming composition (for example, resulting in polyolefin layer/polyamide resin layer/polyolefin layer). An additional layer on the outside the polyolefin layer may also be formed. Also, the innermost layer may be formed separately.

The injection timing of the polyolefin layer-forming composition and the polyamide resin layer-forming composition can be appropriately adjusted in accordance with the shape of the multilayer container to be formed. For example, it is possible to hinder the polyamide resin layer from being exposed at the tip by first starting the injection of the polyolefin layer-forming composition which serves as the two outer layers and then starting the injection of the polyamide resin layer-forming composition thereafter. The temperature during injection molding can be adjusted in consideration of the melting point and softening point of the resin to be used. In the present embodiment, the injection molding temperature may be, for example, from 220 to 290°C.

### <Applications>

The multilayer container of the present embodiment can be preferably used as lid materials for containers, bottles, cups, trays, tubes, and the like.

The multilayer container of the present embodiment is preferably used for packaging and storing medicine, food (processed seafood products, processed livestock products, rice, liquid food), and the like. Details thereof can be found in the descriptions in paragraphs [0033] to [0035] of JP 2011-037199 A, the contents of which are incorporated herein by reference.

In particular, the multilayer container of the present embodiment is preferably used as a transparent container for retort-packed foods or foods to be subjected to boiling before consumption.

### Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below.

If a measuring device used in the examples is not readily available due to discontinuation or the like, another device with equivalent performance can be used for measurement.

In the measurement of melt flow rate (MFR), a melt flow indexer available from Toyo Seiki Seisaku-sho, Ltd. was used.

### 1. Raw Material

### MXD6I:

A polyamide resin synthesized from meta-xylylenediamine, adipic acid, and isophthalic acid in which the proportion of isophthalic acid in the dicarboxylic acids is 50 mol%. It is an amorphous resin. The terminal amino group concentration is in the range of from 10 to 70 peq/g.

### EVOH:

Soarnol DC3212B, an ethylene-vinyl alcohol copolymer, available from Mitsubishi Chemical Corporation. It is a crystalline resin.

### PP1:

Novatec BX05FS available from Japan Polypropylene Corporation, an acid-unmodified polypropylene having an MFR of 45 g/10 minutes as measured under conditions of a temperature of X^{PO}°C, which is the melting point plus 65°C, and 2.16 kgf in accordance with JIS K7210-1:2014

### PP2:

Novatec MA3H available from Japan Polypropylene Corporation, an acid-unmodified polypropylene having an MFR of 10 g/10 minutes as measured under conditions of a temperature of X^{PO}°C, which is the melting point plus 65°C, and 2.16 kgf in accordance with JIS K7210-1:2014

### Mah-PP1:

Bynel 50E803 available from DuPont, a maleic anhydride-modified polypropylene having an MFR of 450 g/10 minutes as measured under conditions of a temperature of X^{mPO}°C, which is the melting point plus 55°C, and 2.16 kgf in accordance with JIS K7210-1:2014

### Mah-PP2:

Admer QF551 available from Mitsui Chemicals, a maleic anhydride-modified polypropylene

At the temperature of X^{mPO}°C, which is the melting point plus 55°C, the MVR was too low to be measured in accordance with JIS K7210-1:2014. Note that, the MFR was 5.7 g/10 minutes measured under conditions of a temperature of X^{mPO}°C, which is the melting point plus 95°C, and 2.16 kgf in accordance with JIS K7210-1:2014.

### <Melting Point and Glass Transition Temperature>

The melting point and the glass transition temperature of the resin were measured by differential scanning calorimetry (DSC).

Specifically, the "melting point" refers to a temperature at which an endothermic peak reaches its maximum during a temperature increase when observed by differential scanning calorimetry (DSC). Moreover, the "glass transition temperature" is determined by a measurement in which, after a sample has been heated and melted once so that thermal history effects on crystallinity have been eliminated, the sample was heated again.

During the measurement, differential scanning calorimetry was used to determine the melting point from the temperature at which the endothermic peak reaches its maximum. The endothermic peak was observed when approximately 5 mg of a sample was heated and melted from the room temperature to a temperature that is equal to or more than an expected melting point at a temperature increase rate of 10°C/min while nitrogen was streamed at 30 mL/min as the atmosphere gas. Next, the melted resin was rapidly cooled using dry ice, and then the temperature was increased again to a temperature equal to or more than the melting point at the rate of 10°C/min, and the glass transition temperature was determined.

For differential scanning calorimetry, "DSC-60" available from Shimadzu Corporation was used.

### <Synthesis Example of MXD6I>

A 50 L jacketed reactor equipped with a stirrer, a partial condenser, a cooler, a thermometer, a dripping tank, and a nitrogen gas introduction tube was charged with 7.5 kg of adipic acid, 8.5 kg of isophthalic acid, 9.3 g of sodium hypophosphite monohydrate, and 4.8 g of sodium acetate, and then sufficiently purged with nitrogen and heated to 180°C under a small nitrogen stream to uniformly melt adipic acid and isophthalic acid, after which 13.9 kg of meta-xylylenediamine was added dropwise over 170 minutes under stirring the system. During this time, the internal temperature was continuously increased to 265°C. Note that the water produced by polycondensation was removed from the system through the partial condenser and the cooler. After the completion of dropwise addition of meta-xylylenediamine, the internal temperature was further increased to 270°C, and the reaction was continued for 10 minutes, after which a polymer was removed as a strand from a nozzle at the bottom of the reactor, and cooled with water and then pelletized to obtain a pelletized polymer.

Next, the polymer obtained through the above operation was inserted into a 250 L rotary tumbler equipped with a heating jacket, a nitrogen gas introduction tube, and a vacuum line, and the pressure in the system was reduced while rotating the tumbler, after which the pressure was returned to normal pressure using nitrogen of a purity of 99 vol% or more. This operation was performed three times. Subsequently, the temperature inside the system was increased to 115°C under nitrogen circulation. Next, the pressure inside the system was reduced, the temperature was maintained at 115°C for 24 hours, nitrogen was introduced to return the system to normal pressure, and then the mixture was cooled, resulting in a polyamide resin (MXD6I).

An alkali metal salt of a higher fatty acid was not blended. Furthermore, when an attempt was made to measure the melting point in accordance with the description in paragraph [0036] of WO 2017/090556 to measure the melting point, the resin did not have a clear melting point and was found to be an amorphous resin.

### 2. Examples 1 and 2 and Comparative Examples 1 to 4

### <Preparation of Polyolefin Layer-Forming Composition>

Pellets of an acid-modified polyolefin (Mah-PP) and pellets of an acid-unmodified polyolefin (PP) were dry blended as shown in Table 1 at a mass ratio of 5:95.

### <Production of Multilayer Injection-Molded Container>

Three layers of resin compositions (pellets) were co-injected almost simultaneously, with the inner layer being composed of the polyamide resin composition (pellets) obtained above and the two outer layers being composed of the polyolefin layer-forming composition (pellets) obtained above (polyolefin resin layer/polyamide resin layer/polyolefin resin layer), resulting in an injected multilayer structure. The detailed conditions were as follows.
Equipment: Injection molding machine, SE130DU-CI available from Sumitomo Heavy Industries, Ltd.
   - Screw diameter
Polyamide resin composition: 16mm diameter
Polyolefin layer-forming resin composition (resin composition containing unmodified PP and modified PP): 32 mm diameter
   - Hot runner: available from Kortec
   - Temperature conditions
Polyamide resin composition: Zone 1 = from 230°C to 250°C, Zones 2 to 4 = from 240°C to 280°C, Zone 5 = from 250°C to 280°C
Polyolefin layer-forming resin composition: Zone 1 = 230°C, Zones 2 to 4 = from 240°C to 250°C, Zone 5 = 250°C
Hot runner temperature: from 240°C to 270°C
   - Mold temperature: 15°C

In the resulting multilayer injection-molded container, the polyamide resin layer had a thickness of 80 µm, and the total thickness of the polyolefin layers was 800 µm (with the thickness of each polyolefin layer being 400 µm).

### <HAZE>

The polyamide resin layer was separated from the resulting multilayer injection-molded container (immediately after molding), and the haze was measured. The haze was measured in accordance with JIS K-7105. The smaller the haze value (unit: %), the higher the transparency.

A color and haze measuring instrument (trade name: COH-400A, available from Nippon Denshoku Industries Co., Ltd.) was used as the measuring device.

A multilayer container that has gone through the following boiling treatment and a multilayer container that has gone through the following retort treatment were also subjected to a measurement for haze in the same manner as described above.

### <<Boiling Treatment>>

Processing apparatus: SR-240 available from Tomy Seiko Co., Ltd.
Treatment temperature: 85°C
Treatment time: 30 minutes (treatment time does not include heating and cooling time)

### <<Retort Treatment>>

Processing apparatus: SR-240 available from Tomy Seiko Co., Ltd.
Treatment temperature: 121°C
Treatment time: 30 minutes (treatment time does not include heating and cooling time)

<OTR (Cumulative Amount of Oxygen Transmitted)>

This was measured in accordance with ASTM D3985.

The oxygen transmission rate (cc/0.21 atm·day·package) of the multilayer container having gone through the retort treatment above was measured at 23°C in an atmosphere of 100% relative humidity inside the container and 50% relative humidity outside. From the resulting oxygen transmission rate, the cumulative amount of oxygen transmitted into the container (cc/0.21 atm·package) was calculated.

During the measurement, OX-TRAN 2/61 available from Modern Controls was used.

### <Adhesive Strength>

The resulting multilayer container was filled with water, heat-sealed with aluminum, and dropped 10 times from a height of 1 m with the same side being the downward-facing surface. The cup was then visually observed and evaluated based on the following criteria.
3: No delamination was observed.
2: Slight delamination was observed.
1: Significant delamination was observed.

### <Moldability (Appearance)>

The amount of weld lines and streaks in the resulting multilayer container was compared with that in Comparative Example 1, which was defined as 2. Five experts evaluated the resulting multilayer container, and the evaluation was decided by a majority vote.
3: No or almost no weld lines and streaks
2: Weld lines and/or streaks are slightly visible
1: Weld lines and/or streaks are visible

**[Tablel 1]**

| | | | Example 1 | Example 2 | Comparative Example 1 | Comparative Example 2 | Comparative Example 3 | Comparative Example 4 |
|---|---|---|---|---|---|---|---|---|
| Barrier Resin | | | MXD61 | MXD61 | EVOH | EVOH | EVOH | MXD6I |
| Acid-Unmodified Polyolefin | | Type | PP1 | PP1 | PP1 | PP2 | PP1 | PP2 |
| | | MFR (g/10 min) | 45 | 45 | 45 | 10 | 45 | 10 |
| Acid-Modified Polyolefin | | Type | Mah-PP1 | Mah-PP2 | Mah-PP1 | Mah-PP1 | Mah-PP2 | Mah-PP1 |
| | | MFR (g/10 min) | 450 | Too low to measure | 450 | 450 | Too low to measure | 450 |
| HAZE | After Molding | % | 1 | 1 | 17 | 16 | 17 | 1 |
| | After Boiling | % | 1 | 1 | 18 | 17 | 18 | 1 |
| | After Retort | % | 15 | 15 | 20 | 21 | 20 | 16 |
| OTR (Cumulative Amount of Oxygen Transmitted) | After Retort | cc/0.21 atm·Package | 0.042 | 0.043 | 1.1 | 1.2 | 1.1 | 0.045 |
| Adhesive Strength | | | 3 | 2 | 3 | 3 | 2 | 3 |
| Moldability | | | 2 | 2 | 2 | 1 | 2 | 1 |

The results above indicate that the multilayer container according to an embodiment of the present invention had low haze and excellent transparency even after being subjected to boiling and retort (Examples 1 and 2). Furthermore, the multilayer container according to an embodiment of the present invention had few weld lines in the polyolefin layer and had excellent moldability (appearance). Furthermore, in the present invention, there was a concern that the adhesion between the barrier resin layer (polyamide resin layer) and the polyolefin layer could be inferior, unlike the case where EVOH was used as the barrier resin; despite that, the adhesion was actually sufficient. In addition, the multilayer container according to an embodiment of the present invention also had excellent oxygen barrier properties after a retort treatment.

In comparison, in Comparative Examples 1 to 3 in which an ethylene-vinyl alcohol copolymer (EVOH) was used as the barrier resin, the haze after boiling was significantly worse. Further, the oxygen barrier property after a retort treatment was also worse.

In addition, when the MFR of acid-unmodified polyolefin was outside the range of the present invention (Comparative Examples 2 and 4), weld lines were observed in the polyolefin layer of the resulting multilayer container, which translated to inferior moldability (appearance).

Furthermore, the adhesive strength between the polyamide resin layer and the polyolefin layer was further improved by making the MFR of the acid-modified polyolefin more than the MFR of the acid-unmodified polyolefin (as indicated by the comparison between Example 1 and Example 2).

### Reference Signs List

1. Polyolefin layer
2. Polyamide resin layer
3. Polyolefin layer

## Claims

1. A multilayer container, comprising:
a polyolefin layer comprising an acid-modified polyolefin and an acid-unmodified polyolefin; and
a polyamide resin layer being in contact with the polyolefin layer and comprising a polyamide resin,
the polyamide resin comprising a polyamide resin (a), the polyamide resin (a) comprising diamine-derived structural units and dicarboxylic acid-derived structural units, 70 mol% or more of the diamine-derived structural units being derived from meta-xylylenediamine, from 30 to 60 mol% of the dicarboxylic acid-derived structural units being derived from an α,ω-linear aliphatic dicarboxylic acid having from 4 to 20 carbons, and from 70 to 40 mol% of the dicarboxylic acid-derived structural units being derived from isophthalic acid,
wherein the acid-unmodified polyolefin having a melt flow rate of 20 g/10 minutes or more as measured under conditions of a temperature of X^{PO}°C and 2.16 kgf in accordance with JIS K7210-1:2014, and
the temperature X^{PO} is a melting point of the acid-unmodified polyolefin plus 65°C.

2. The multilayer container according to claim 1, wherein
the acid-modified polyolefin has a melt flow rate, measured under conditions of a temperature of X^{mPO}°C and 2.16 kgf in accordance with JIS K7210-1:2014, that is more than the melt flow rate of the acid-unmodified polyolefin, the temperature X^{mPO} being a melting point of the acid-modified polyolefin plus 55°C.

3. The multilayer container according to claim 1 or 2, wherein a content of an alkali metal salt of a higher fatty acid contained in the polyamide resin layer is less than 50 mass ppm in terms of alkali metal atoms.

4. The multilayer container according to any one of claims 1 to 3, wherein the acid-modified polyolefin comprises an acid-modified polypropylene.

5. The multilayer container according to any one of claims 1 to 4, wherein the acid-modified polyolefin has a melt flow rate of more than 20 g/10 minutes and 500 g/10 minutes or less.

6. The multilayer container according to any one of claims 1 to 5, wherein the acid-unmodified polyolefin comprises polypropylene.

7. The multilayer container according to any one of claims 1 to 6, wherein the acid-unmodified polyolefin has a melt flow rate of from 20 to 50 g/10 minutes.

8. The multilayer container according to any one of claims 1 to 7, wherein the polyamide resin has a terminal amino group concentration of from 10 to 70 peq/g.

9. The multilayer container according to any one of claims 1 to 8, wherein the multilayer container is a multilayer injection-molded container.

10. The multilayer container according to any one of claims 1 to 9, wherein the multilayer container has a haze of 10% or less as measured in accordance with JIS K-7105.

11. The multilayer container according to any one of claims 1 to 10, wherein the multilayer container has a haze, measured after a boiling treatment at 85°C for 30 minutes in accordance with JIS K-7105, that is two times or less than the haze before the boiling treatment.

12. The multilayer container according to any one of claims 1 to 11, wherein the polyamide resin (a) is an amorphous resin.

13. A method for producing a multilayer container, the method comprising injection molding by injecting a polyolefin layer comprising a polyolefin layer-forming composition and a polyamide resin layer comprising a polyamide resin layer-forming composition into a mold in a way that the polyolefin layer and the polyamide resin layer are in contact with each other,
the polyolefin layer-forming composition comprising an acid-modified polyolefin and an acid-unmodified polyolefin, the acid-unmodified polyolefin having a melt flow rate of 20 g/10 minutes or more as measured under conditions of a temperature of X^{PO}°C and 2.16 kgf in accordance with JIS K7210-1:2014,
the polyamide resin layer-forming composition comprising a polyamide resin (a), the polyamide resin (a) comprising diamine-derived structural units and dicarboxylic acid-derived structural units, 70 mol% or more of the diamine-derived structural units being derived from meta-xylylenediamine, from 30 to 60 mol% of the dicarboxylic acid-derived structural units being derived from an α,ω-linear aliphatic dicarboxylic acid having from 4 to 20 carbons, and from 70 to 40 mol% of the dicarboxylic acid-derived structural units being derived from isophthalic acid,
wherein the temperature X^{PO} is a melting point of the acid-unmodified polyolefin plus 65°C.

14. The method for producing a multilayer container according to claim 13, wherein
the acid-modified polyolefin has a melt flow rate, measured under conditions of a temperature of X^{mPO}°C and 2.16 kgf in accordance with JIS K7210-1:2014, that is more than the melt flow rate of the acid-unmodified polyolefin, the temperature X^{mPO} being a melting point of the acid-modified polyolefin plus 55°C.

15. The method for producing a multilayer container according to claim 13 or 14, wherein the multilayer container is the multilayer container according to any one of claims 1 to 12.
